# EUROPEAN PATENT APPLICATION

(11) **EP 4 811 905 A1**
(43) Date of publication of application: **23.09.2026**
(21) Application number: 23958929.4
(22) Date of filing: 17.11.2023
(51) Int. Cl.: H04W 72/21, H04W 16/28, H04W 72/0446, H04W 92/16

(54) **WIRELESS DEVICE, BASE STATION, AND COMMUNICATION METHOD**

(71) Applicant: NTT DOCOMO, INC., Tokyo 100-6150 (JP)
(72) Inventor: SHIMODAIRA, Hidekazu, Tokyo 100-6150 (JP); ANDOU, Kei, Tokyo 100-6150 (JP)
(74) Representative: Hoffmann Eitle
(86) International application number: PCT/JP2023/041540
(87) International publication number: WO 2025/104929

(57) **Abstract**

A wireless device includes: a control unit configured to configure, with respect to a plurality of endpoints used for uplink demodulation reference signal beamforming, a configuration in which at least one window for receiving the demodulation reference signal is used for each endpoint; and a reception unit configured to receive the demodulation reference signal in the window.

## Description

### TECHNICAL FIELD

The present invention relates to a wireless device, a base station, and a communication method in a wireless communication system.

### BACKGROUND ART

Regarding NR (New Radio) (also referred to as "5G"), or a successor system to LTE (Long Term Evolution), technologies have been implemented which satisfy the following requirements: a high capacity system, high data transmission rate, low delay, simultaneous connection of multiple terminals, low cost, power saving, etc. (for example, Non-Patent Literature 1).

In addition, in the O-RAN standardization, uplink performance improvement (UPLI) in the massive MIMO (Multiple Input Multiple Output) for the next generation wireless access network is being discussed.

### CITATION LIST

### Non-Patent Literature

Non-Patent Literature 1: 3GPP TS 23.501 V18.1.0 (2023-03)

### SUMMARY OF INVENTION

### TECHNICAL PROBLEM

In UPLI, in order to prevent information omission between an O-RU and an O-DU, the channel estimation that has been performed by the conventional O-DU (Open-Distributed Unit) is performed by the O-RU (Open-Radio Unit). In the O-RU, an uplink DMRS reception and/or transmission window is required to be configured when performing channel estimation using a de-modulation reference signal (DMRS). In the above-described configuration, flexible configuration is desirable from the viewpoint of performance improvement. However, complicated configuration processing is not desirable from the viewpoint of deployment.

The present invention has been made in view of the above points, and it is an object of the present invention to appropriately configure an uplink DMRS reception and/or transmission window in the wireless communication system.

### SOLUTION TO PROBLEM

According to the disclosed technique, a wireless device is provided. The wireless device includes: a control unit configured to configure, with respect to a plurality of endpoints used for uplink demodulation reference signal beamforming, a configuration in which at least one window for receiving the demodulation reference signal is used for each endpoint; and a reception unit configured to receive the demodulation reference signal in the window.

### ADVANTAGEOUS EFFECTS OF INVENTION

According to the disclosed technique, a technique of appropriately configuring the uplink DMRS reception and/or transmission window in the wireless communication system is provided.

### BRIEF DESCRIPTION OF DRAWINGS

[Fig. 1] is a drawing illustrating a configuration example (1) of a wireless communication system in an embodiment of the present invention.
[Fig. 2] is a drawing illustrating a configuration example (2) of a wireless communication system in an embodiment of the present invention.
[Fig. 3] is a drawing illustrating an example of a structure of a base station 10 in an embodiment of the present invention.
[Fig. 4] is a drawing for describing massive MIMO methods.
[Fig. 5] is a drawing for describing a reception and/or transmission window in an embodiment of the present invention.
[Fig. 6] is a drawing for describing a first method in an embodiment of the present invention.
[Fig. 7] is a drawing for describing a second method in an embodiment of the present invention.
[Fig. 8] is a drawing for describing a third method in an embodiment of the present invention.
[Fig. 9] is a drawing for describing a fourth method in an embodiment of the present invention.
[Fig. 10] is a second drawing for describing the fourth method in an embodiment of the present invention.
[Fig. 11] is a drawing illustrating an example of a structure of a distributed device in an embodiment of the present invention.
[Fig. 12] is a drawing illustrating an example of a structure of a wireless device in an embodiment of the present invention.
[Fig. 13] is a drawing illustrating an example of a hardware structure of the wireless device or the distributed device in an embodiment of the present invention.
[Fig. 14] is a drawing illustrating an example of a structure of a vehicle in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional technique may be the conventional LTE or NR, the conventional technique is not limited to the conventional LTE or NR.

Further, in the following embodiments, the terms used for the conventional NR, etc., are used for the sake of description convenience, and the similar signals, functions, etc., may be referred to as different names.

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression that a radio parameter or the like is "configured" may mean that a predetermined value is pre-configured, or may mean that a radio parameter indicated by a base station 10 or a terminal 20 is configured.

### (System configuration example)

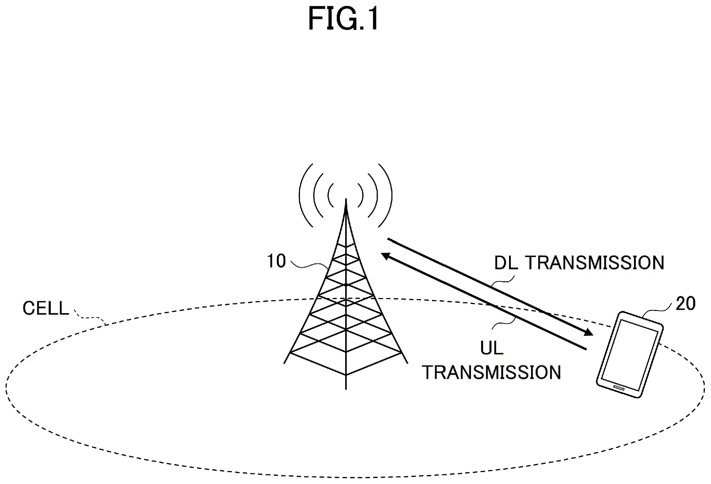

Fig. 1 is a drawing illustrating a configuration example (1) of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20. It is to be noted that the base station 10 in an embodiment of the present invention specifically has a structure including an O-RU (O-RAN Radio Unit) and an O-DU (O-RAN Distributed Unit), and the details thereof will be described later in the present description.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and/or an NR-SSS. The system information may be transmitted via an NR-PBCH, and may be referred to as broadcast information. The synchronization signal and the system information may be referred to as an SSB (SS/PBCH block). SSB may be referred to as a synchronization signal or may be referred to as a synchronization signal block. As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, an IoT terminal, an M2M (Machine-to-Machine) communication module, or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

The terminal 20 is capable of performing carrier aggregation in which a plurality of cells (a plurality of CCs (Component Carrier)) are bundled for performing communication with the base station 10. In the carrier aggregation, one PCell (Primary cell) and one or more SCells (Secondary cell) are used. In addition, PUCCH-SCell having PUCCH may be used.

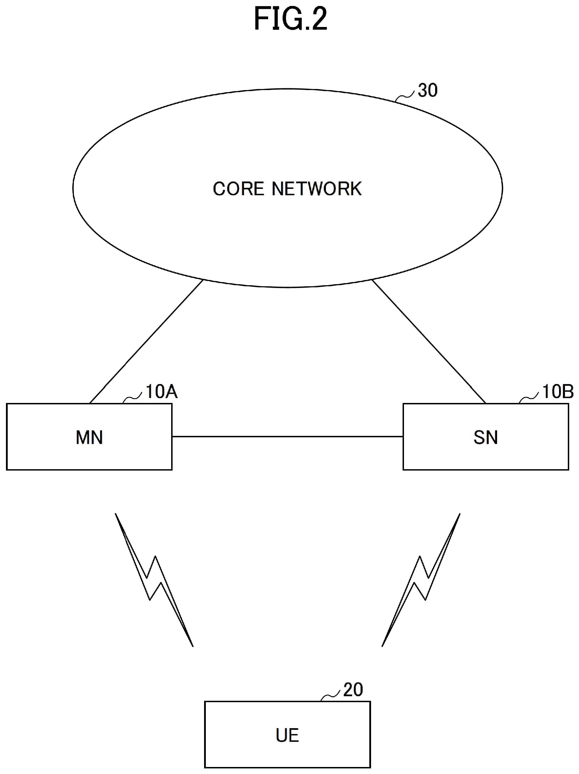

Fig. 2 is a drawing illustrating a configuration example (2) of a wireless communication system according to an embodiment of the present invention. Fig. 2 shows an example of a configuration of a wireless communication system in a case where DC (Dual connectivity) is performed. As shown in Fig. 2, a base station 10A serving as an MN (Master Node) and a base station 10B serving as an SN (Secondary Node) are provided. The base station 10A and the base station 10B are each connected to a core network. The terminal 20 is enabled to communicate with both the base station 10A and the base station 10B.

A cell group provided by the base station 10A that is an MN is called an MCG (Master Cell Group), and a cell group provided by the base station 10B that is an SN is called an SCG (Secondary Cell Group). In addition, in DC, the MCG includes one PCell and one or more SCells, and the SCG includes one PSCell (Primary SCG Cell) and one or more SCells.

Processing operations in an embodiment of the present invention may be performed in a system configuration shown in Fig. 1, in a system configuration shown in Fig. 2, or in other system configurations.

In the O-RAN standardization, uplink performance improvement (UPLI) in the massive MIMO for the next generation wireless access network is being discussed. In UPLI, information omission between the O-RU and the O-DU is prevented by having the O-RU performing the de-modulation reference signal (DMRS) channel estimation and the BWF (Beam Forming Weight) calculation that had been performed by the conventional O-DU.

In addition, in the O-RAN standardization, two configurations are being discussed, the two configurations including "DMRS-BF-EQ" in which the O-RU performs processing related to DMRS and processing of uplink equalization and "DMRS-BF-NEQ" in which the O-RU and the O-DU perform processing related to DMRS and the O-DU performs processing of uplink equalization.

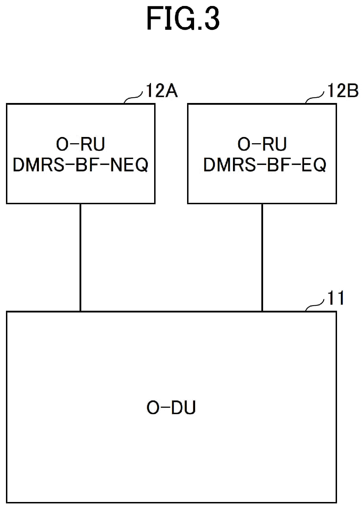

Fig. 3 is a drawing illustrating an example of a structure of a base station 10 in an embodiment of the present invention. The base station 10 illustrated in Fig. 3 includes an O-DU 11, an O-RU 12A that supports the DMRS-BF-NEQ configuration, and an O-RU 12B that supports the DMRS-BF-EQ configuration. The O-DU 11 is connected to the O-RU 12A and the O-RU 12B via lines. The configuration of the line connection may be point-to-point, or may be implemented by using the layer 2 switch or the like. Hereinafter, in a case where the O-RU 12A and the O-RU 12B are not required to be distinguished, the O-RU 12A and the O-RU 12B will be described as an O-RU 12.

In an embodiment of the present invention, the O-DU 11 may be referred to as a distributed device and the O-RU 12 may be referred to as a wireless device. The O-DU 11 is a logical node that has a function of controlling or configuring the O-RU 12. The O-RU 12 is a logical node that has a function of performing RF processing.

With respect to the communication protocol stack between the O-DU 11 and the O-RU 12, C-plane is used for transferring control signals and U-Plane is used for transferring user data. In addition, S-Plane is a protocol for implementing the synchronization between devices. M-Plane is a management plane that takes care of maintenance and monitoring signals. Information can be transmitted from the O-DU 11 to the O-RU 12 by using M-Plane.

In addition, the O-DU 11 may be replaced with a DU and the O-RU 12 may be replaced with an RU.

### (Massive MIMO method)

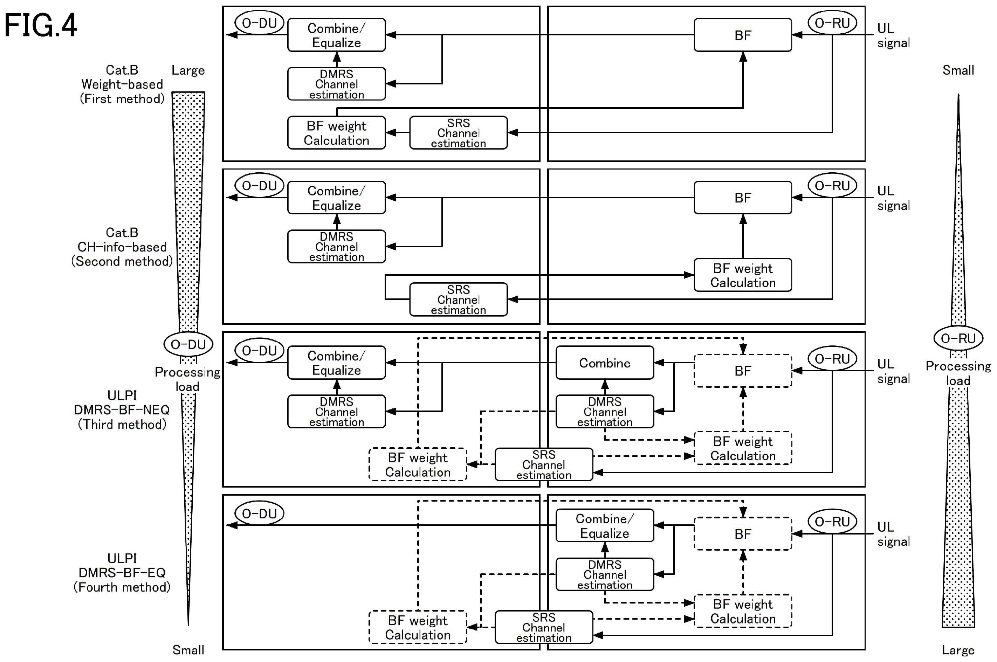

Fig. 4 is a drawing for describing massive MIMO methods. In Fig. 4, there are overview descriptions for the first method (Cat. B Weight-based) and the second method (Cat. B CH-info-based) that have been determined in the O-RAN standardization and for the third method (ULPI DMRS-BF-NEQ) and the fourth method (DMRS-BF-EQ) that are being discussed in the O-RAN standardization. An uplink signal (UL signal) received by the base station 10 is first input to the O-RU and processing is performed, and then, an output is input to the O-DU and further processing is performed by the O-DU. The performed processing includes BF (Beam Forming), BF weight calculation, SRS (Sounding Reference Signal) channel estimation, DMRS channel estimation, combining, equalization, etc. In the first method, BF is performed by the O-RU and processes other than BF are performed by the O-DU. In the second method, BF and BF weight calculation are performed by the O-RU and processes other than BF and BF weight calculation are performed by the O-DU. In the third method, DMRS channel estimation and combining are performed by the O-RU and DMRS channel estimation and combining/equalization are performed by the O-DU. In the fourth method, DMRS channel estimation and combining/equalization are performed by the O-RU. It is to be noted that the third method and the fourth method are currently being discussed to be determined in the O-RAN standardization, which one of the O-RU or the O-DU is to perform SRS channel estimation has not been determined, and there is a possibility that processes illustrated by dotted lines may be not performed. As illustrated in the drawing, the processing load of the O-RU will be the smallest in the first method and will be the largest in the fourth method, while the processing load of the O-DU will be the largest in the first method and will be the smallest in the fourth method.

### (Uplink signal demodulation operation)

In the ULPI, in a case where beamforming and equalization are performed by using the uplink shared channel demodulation reference signal (PUSCH DMRS), the delay increases as much as the delay of the reception timing and the timing of transmission to the O-DU, and thus, reception of DMRS symbols and transmission to the O-DU are required to be performed by the O-RU at an earlier timing by taking into account the processing delay.

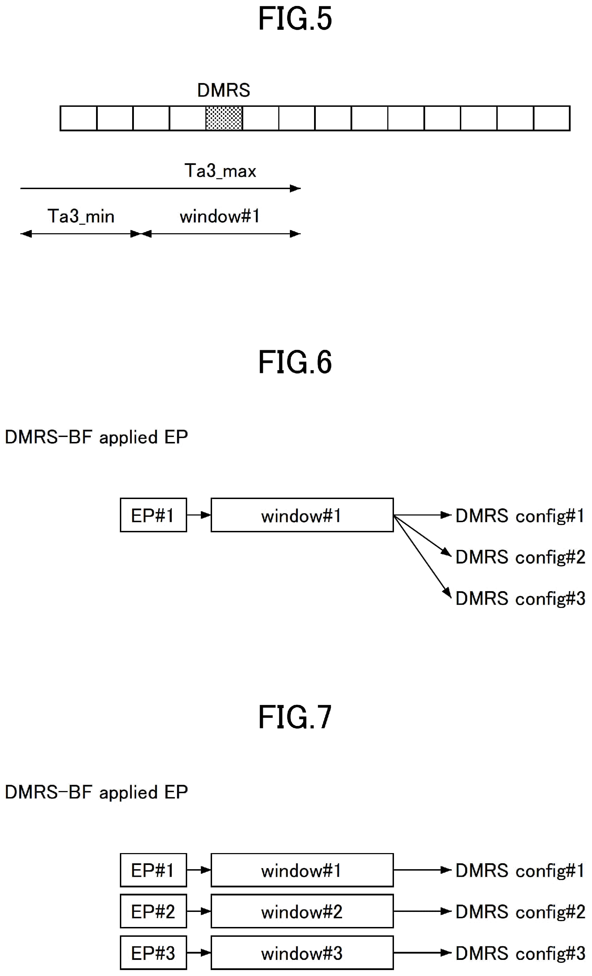

The window for processing an uplink signal (UL signal) transmitted from an antenna to the O-RU (reception and/or transmission window) is conventionally specified by the difference between the maximum value and the minimum value of the propagation allowance time that are referred to as Ta3_max and Ta3_min (window = Ta3_max - Ta3_min). In ULPI, the position of the window is required to be shifted appropriately. Fig. 5 is a drawing for describing a reception and/or transmission window in an embodiment of the present invention. As illustrated in Fig. 5, an uplink DMRS is received in a window between Ta3_min and TA3_max. In an example illustrated in Fig. 5, DMRS is allocated in one symbol within a slot. However, DMRS will be allocated in up to four symbols depending on the DMRS configuration (DMRS config). In addition, there may be a case in which DMRS are allocated in two contiguous symbols.

In the O-RAN standardization, there is agreement to provide a configuration for each endpoint (hereinafter, referred to as an EP) in DMRS beamforming processing (BMRS-BF). In other words, there may be a case in which a BF method other than DMRS-BF (Weight-based, Channel-info, or the like) is used for each EP.

### (Embodiment)

Embodiment(s) will be described. In an embodiment of the present invention, a method of applying shifting of the position of the reception and/or transmission window in the uplink demodulation reference signal beamforming (DMRS-BF) to the ULPI-applicable symbols in the O-RU 12 will be described.

### (First method)

In the first method, one common window is configured for an endpoint to which DMRS-BF is applied. Fig. 6 is a drawing for describing the first method in an embodiment of the present invention. As illustrated in Fig. 6, with respect to the first EP (EP#1), a first window (window#1) is configured, and windows#1 is applied to all DMRS received by EP#1. In addition, in an example illustrated in Fig. 6, window#1 is applied to three DMRS configuration information items (DMRS config#1 to DMRS config#3).

The first method has a simple configuration, and thus, processes required for the configuration, operation cost, and the like can be reduced. On the other hand, a fixed window is required to be used regardless of the DMRS positions within a slot, and thus, there is no configuration flexibility and there is a problem in terms of optimization of the ULPI performance.

### (Second method)

In the second method, a window is configured for each of the endpoints to which DMRS-BF is applied. Fig. 7 is a drawing for describing the second method in an embodiment of the present invention. As illustrated in Fig. 7, different windows (window#1 to window#3) are configured for three different endpoints (EP#1 to EP#3), respectively. In addition, in an example illustrated in Fig. 7, windows (window#1 to window#3) are applied to the three corresponding DMRS configuration information items (DMRS config#1 to DMRS config#3). Alternatively, a plurality of windows may be applied to a single DMRS config.

In the second method, an optimal window can be configured depending on the DMRS positions. However, the number of endpoints is required to be increased, the endpoints being configured for the corresponding DMRS positions.

### (Third method)

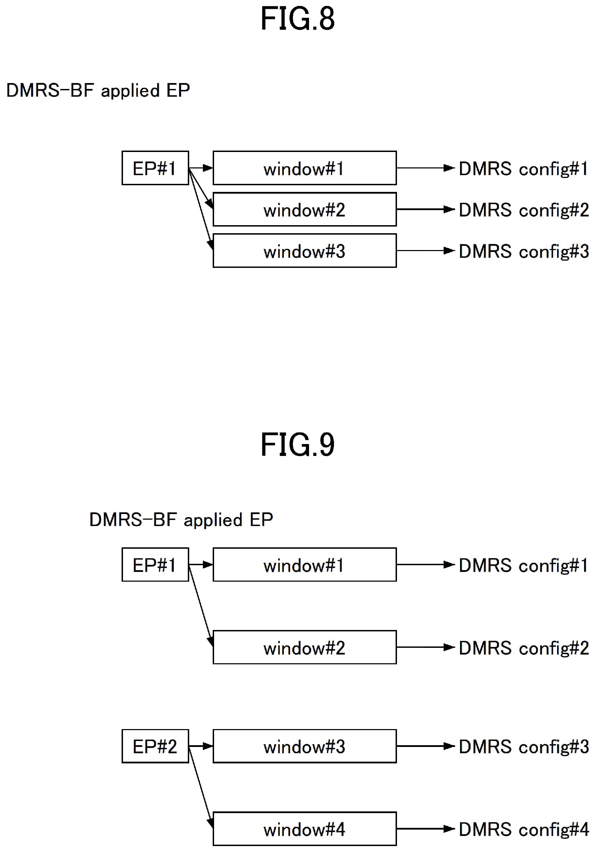

In the third method, a plurality of windows are configured for an endpoint to which DMRS-BF is applied. Fig. 8 is a drawing for describing the third method in an embodiment of the present invention. As illustrated in Fig. 8, three windows (window#1 to window#3) are configured for a single endpoint (EP#1). In addition, in an example illustrated in Fig. 8, windows (window#1 to window#3) are applied to the three corresponding DMRS configuration information items (DMRS config#1 to DMRS config#3). Alternatively, a plurality of windows may be applied to a single DMRS config.

In the third method, an optimal window can be configured depending on the DMRS positions without increasing the number of endpoints. It is to be noted that a configuration in an endpoint becomes complicated.

### (Fourth method)

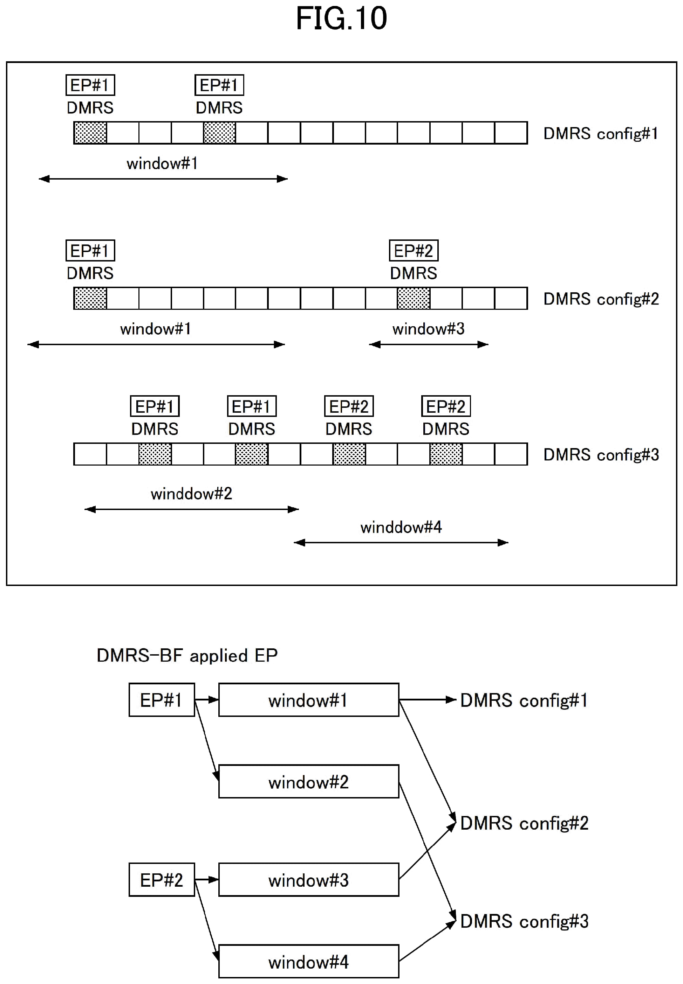

In the fourth method, a plurality of windows are configured for an endpoint to which DMRS-BF is applied and a plurality of endpoints are enabled to be configured. Fig. 9 is a drawing for describing the fourth method in an embodiment of the present invention. As illustrated in Fig. 9, for example, two windows of window#1 and window#2 can be configured for EP#1 and two windows of window#3 and window#4 can be configured for EP#2. Here, four windows (window#1 to window#4) are respectively applied to DMRS config#1 to DMRS config#4. Alternatively, a plurality of windows may be applied to a single DMRS configuration. Fig. 10 is a second drawing for describing the fourth method in an embodiment of the present invention. As illustrated in Fig. 10, DMRS according to configuration information of DMRS config#1 are transmitted by using two symbols for EP#1 and window#1 is used for the configuration information. DMRS according to configuration information of DMRS config#2 are transmitted by using one symbol for EP#1 and one symbol for EP#2, and window#1 and window#3 are respectively used as windows. DMRS according to configuration information of DMRS config#3 are transmitted by using two symbols for EP#1 and tow symbols for EP#2, and window#2 and window#4 are respectively used as windows.

Configurations illustrated in Fig. 9 and Fig. 10 are merely examples, and, for example, different windows may be used for two DMRS symbols according to DMRS config#1, and different windows may be used for four DMRS symbols according to DMRS config#3.

In other words, in the fourth method, with respect to a plurality of endpoints used for the uplink demodulation reference signal beamforming, the O-RU 12 configures a configuration in which at least one window is used for receiving a demodulation reference signal for each of the endpoints and receives the demodulation reference signal by using the configured window. In addition, in the fourth method, a single window may be used with respect to the demodulation reference signal configuration information (DMRS-config) that configures at least one symbol position for the demodulation reference signal. Alternatively, in the fourth method, a plurality of windows may be allowed to be used with respect to the demodulation reference signal configuration information (DMRS-config) that configures at least one symbol position for the demodulation reference signal.

The fourth method is enabled to configure a flexible configuration by having both the second method and the third method, and is enabled to configure an optimal configuration by taking into account the performance improvement in UPLI and the configuration complexity.

### (Method related to configuration indication)

Configurations related to endpoints and windows in the above-described first method to the above-described fourth method may be dynamically indicated from the O-DU 11 to the O-RU 12 by using C-Plane signals. Alternatively, the indication may be indicated from the O-DU 11, NMS (Network Management System), or the like to the O-RU 12 in a fixed manner as an initial configuration by using M-Plane signals. Alternatively, the O-RU 12 may implicitly determine the configuration based on the received DMRS or configuration information related to DMRS (DMRS config).

In addition, configurations related to endpoints and windows in the above-described first method to the fourth method and/or an indication related to the capability of the O-RU 12 may be transmitted from the O-RU 12 to the O-DU 11. In addition, the indication may include information related to windows to be used and/or windows that can be used. According to the above-described operation, information related to the configuration and the capability can be shared between the O-DU 11 and the O-RU 12.

According to an embodiment of the present invention, the uplink DMRS reception and/or transmission window can be configured appropriately in the wireless communication system. For example, in the uplink performance improvement (UPLI), a plurality of uplink DMRS reception and/or transmission windows can be configured for each of the endpoints to which DMRS-BF is applied. In addition, the O-RU 12 can transmit, to the O-DU 11, information related to channel estimation that is calculated based on the received demodulation reference signal, or the like.

### (Device configuration)

Next, an example of a functional configuration of the O-DU 11 and the O-RU 12 that perform processing and operations described above will be described. The O-DU 11 may be referred to as a distributed device and the O-RU 12 may be referred to as a wireless device.

### <O-DU 11>

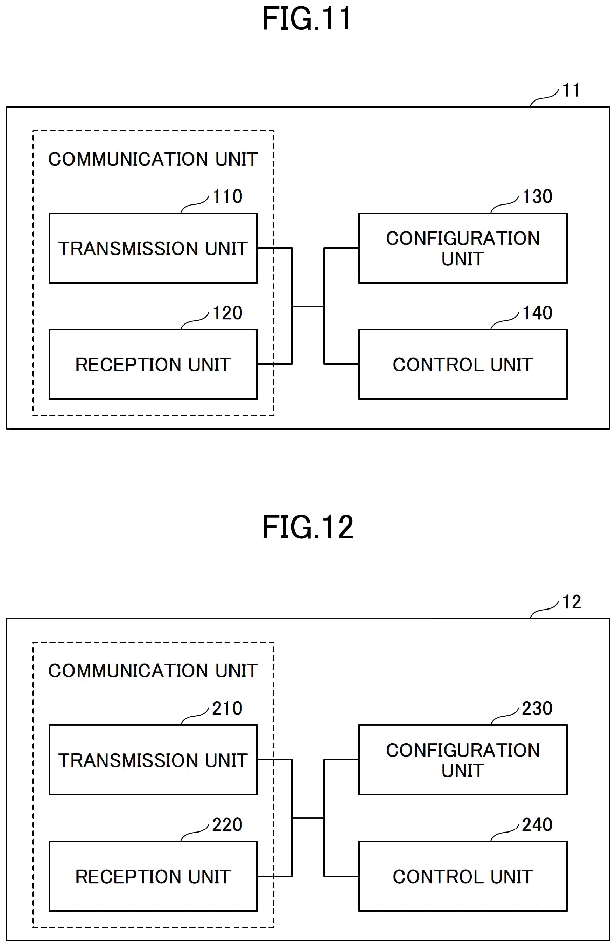

Fig. 11 is a drawing illustrating an example of a functional configuration of the O-DU 11. As shown in Fig. 11, the O-DU 11 includes a transmission unit 110, a reception unit 120, a configuration unit 130, and a control unit 140. The functional configuration illustrated in Fig. 11 is merely an example. Functional divisions and names of functional units may be anything as long as operations according to an embodiment of the present invention can be performed. Further, the transmission unit 110 and the reception unit 120 may be combined and may be referred to as a communication unit.

The transmission unit 110 includes a function for generating a signal to be transmitted to the terminal 20 side and transmitting the signal to the O-RU 12. The reception unit 120 receives a signal transmitted from the O-RU 12.

The configuration unit 130 stores configuration information in a memory included in the configuration unit 130, reads the configuration information from the memory as needed, and transmits the configuration information to the terminal 20 via the transmission unit 110. The control unit 140 performs control related to processing of the O-DU 11. The transmission unit 110 may be referred to as a transmitter, and the reception unit 120 may be referred to as a receiver.

### <O-RU 12>

Fig. 12 is a drawing illustrating an example of a functional configuration of the O-RU 12. As shown in Fig. 12, the O-RU 12 includes a transmission unit 210, a reception unit 220, a configuration unit 230, and a control unit 240. The functional configuration illustrated in Fig. 12 is merely an example. Functional divisions and names of functional units may be anything as long as operations according to an embodiment of the present invention can be performed. The transmission unit 210 and the reception unit 220 may be combined and may be referred to as a communication unit.

The control unit 210 performs transmission to the terminal 20 and performs transmission to the O-DU 11. More specifically, the transmission unit 210 includes an antenna used for signal transmission to the terminal 20 and a transmission function (for example, an optical fiber interface unit) for performing signal transmission to the O-DU 11.

The reception unit 220 performs reception from the terminal 20 and reception from the O-DU 11. More specifically, the transmission unit 220 includes an antenna used for signal reception from the terminal 20 and a reception function (for example, an optical fiber interface unit) for performing signal reception from the O-DU 11.

The configuration unit 230 stores configuration information in a memory included in the configuration unit 230, and reads the configuration information from the memory as needed. In addition, the configuration unit 230 also stores pre-configured configuration information.

The control unit 240 controls the O-RU 12.

In the present specification, at least the following clauses are disclosed.

### <Clause>

### (Clause 1)

A wireless device including:
a control unit configured to configure, with respect to a plurality of endpoints used for uplink demodulation reference signal beamforming, a configuration in which at least one window for receiving the demodulation reference signal is used for each endpoint; and
a reception unit configured to receive the reference signal by using the window.

### (Clause 2)

The wireless device as described in clause 1, wherein
the control unit uses one window for configuration information of the demodulation reference signal, the configuration information configuring at least one symbol position for the demodulation reference signal.

### (Clause 3)

The wireless device as described in clause 1, wherein
the control unit allows a plurality of windows to be used for configuration information of the demodulation reference signal, the configuration information configuring at least one symbol position for the demodulation reference signal.

### (Clause 4)

The wireless device as described in clause 1, wherein
the reception unit receives an indication related to the configuration configured by the control unit at a time of initial configuration or at a dynamic timing.

### (Clause 5)

A base station including: a wireless device; and a distributed device, wherein
the wireless device includes:
a control unit configured to configure, with respect to a plurality of endpoints used for uplink demodulation reference signal beamforming, a configuration in which at least one window for receiving the demodulation reference signal is used for each endpoint; and
a reception unit configured to receive the reference signal by using the window, and
receive an indication related to the configuration configured by the control unit from the distributed device; and
a transmission unit configured to transmit, to the distributed device, information related to channel estimation that is calculated based on the demodulation reference signal received by the reception unit, and
the distributed device includes:
   a transmission unit configured to transmit information related to the configuration to the wireless device; and
   a reception unit configured to receive information related to the channel estimation from the wireless device.

### (Clause 6)

A communication method performed by a wireless device, the communication method including:
configuring, with respect to a plurality of endpoints used for uplink demodulation reference signal beamforming, a configuration in which at least one window for receiving the demodulation reference signal is used for each endpoint; and
receiving the demodulation reference signal by using the window.

According to any one of clause 1 to clause 6, the uplink DMRS window can be configured appropriately in the wireless communication system.

### (Hardware structure)

The block diagrams that have been used to describe the above embodiments (Fig. 11 and Fig. 12) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

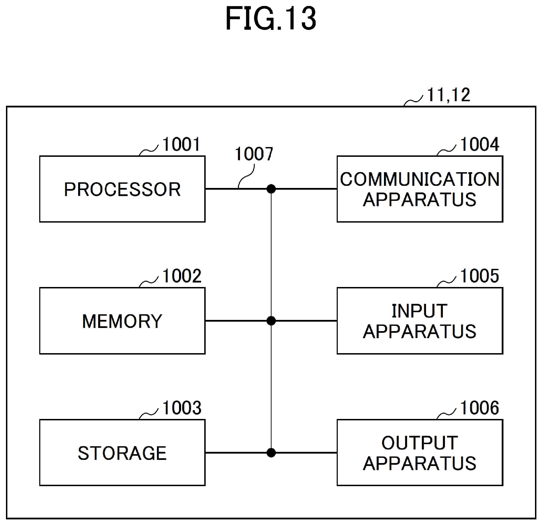

For example, the O-DU 11, the O-RU 12, etc., according to an embodiment of the present disclosure may function as a computer for processing the radio communication method of the present disclosure. Fig. 13 is a drawing illustrating an example of hardware structures of the O-DU 11 and the O-RU 12 related to an embodiment of the present invention. Physically, the above-described O-DU 11 and the O-RU 12 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the O-DU 11 and the O-RU 12 may be configured to include one or more of apparatuses shown in the drawings, or may be configured not to include part of apparatuses.

Each function of the O-DU 11 and the O-RU 12 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may include a central processing unit (CPU) including an interface with a peripheral apparatus, a control apparatus, a calculation apparatus, a register, etc. For example, the above-described control unit 140, control unit 240, and so on may be implemented by the processor 1001.

Furthermore, the processor 1001 reads programs (program codes), software modules, data, or the like, from at least one of the storage 1003 or the communication apparatus 1004, into the memory 1002, and executes various processes according to these. As for the programs, programs to allow computers to execute at least part of the operations of the above-described embodiments are used. For example, the control unit 140 of the O-DU 11 illustrated in Fig. 11 may be implemented by control programs that are stored in the memory 1002 and that operate on the processor 1001. In addition, for example, the control unit 240 of the O-RU 12 illustrated in Fig. 12 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the O-DU 11 and the O-RU 12 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

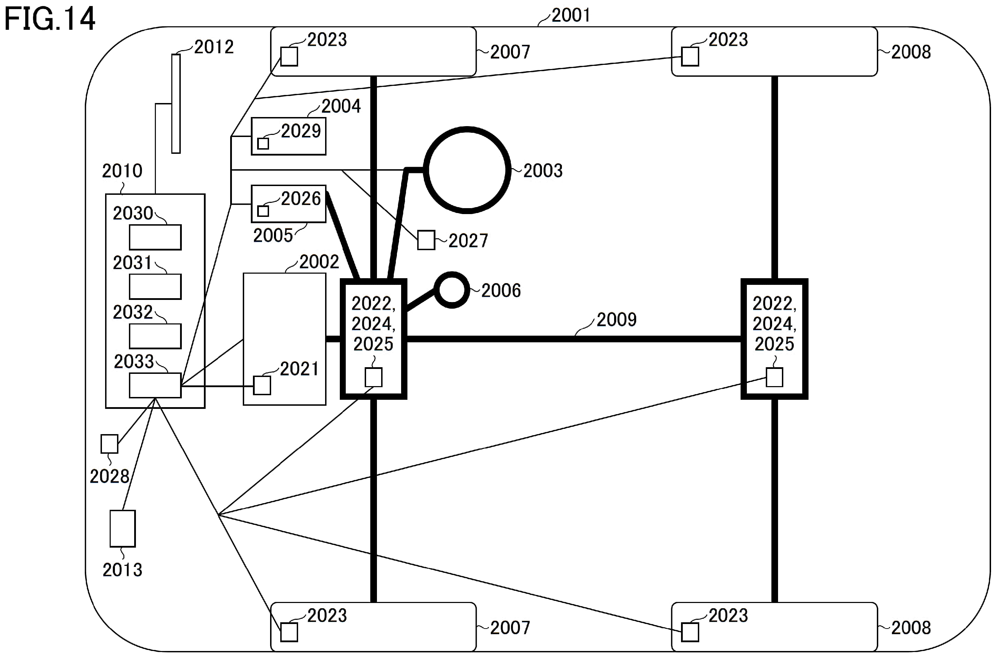

Also, the O-DU 11 or the O-RU 12 may be included in the vehicle 2001. Fig. 14 shows an example of a configuration of a vehicle 2001. As shown in Fig. 14, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The O-DU 11 or the O-RU 12 related to the aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheels or the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the O-DU 11 and the O-RU 12 have been described by using functional block diagrams. However, the apparatuses may be realized by hardware, software, or a combination of hardware and software. The software executed by a processor included in the O-DU 11 according to an embodiment of the present invention and the software executed by a processor included in the O-RU 12 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. In addition, a plurality of systems may be combined (for example, a combination of: at least one of LTE or LTE-A; 5G, and the like) to be applied. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a Boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Further, the base station in the present disclosure may be read as the terminal. For example, each aspect/embodiment of the present disclosure may be applied to a configuration in which communications between the base station and the terminal are replaced by communications between multiple terminals 20 (e.g., may be referred to as D2D (Device-to-Device), V2X (Vehicle-to-Everything), etc.). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Similarly, the terminal in the present disclosure may be read as the base station. In this case, the function of the terminal described above may be provided by the base station.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe. Further, a slot may be referred to as a unit time. The unit time may vary for each cell depending on the numerology.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for UE.

At least one of configured BWPs may be active, and the UE is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed. The CP overhead can be flexibly changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
11 O-DU
12A, 12B O-RU
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A wireless device comprising:
a control unit configured to configure, with respect to a plurality of endpoints used for uplink demodulation reference signal beamforming, a configuration in which at least one window for receiving the demodulation reference signal is used for each endpoint; and
a reception unit configured to receive the reference signal by using the window.

2. The wireless device as claimed in claim 1, wherein
the control unit uses one window for configuration information of the demodulation reference signal, the configuration information configuring at least one symbol position for the demodulation reference signal.

3. The wireless device as claimed in claim 1, wherein
the control unit allows a plurality of windows to be used for configuration information of the demodulation reference signal, the configuration information configuring at least one symbol position for the demodulation reference signal.

4. The wireless device as claimed in claim 1, wherein
the reception unit receives an indication related to the configuration configured by the control unit at a time of initial configuration or at a dynamic timing.

5. A base station comprising: a wireless device; and a distributed device, wherein
the wireless device includes:
a control unit configured to configure, with respect to a plurality of endpoints used for uplink demodulation reference signal beamforming, a configuration in which at least one window for receiving the demodulation reference signal is used for each endpoint;
a reception unit configured to receive the demodulation reference signal by using the window, and to receive an indication related to the configuration configured by the control unit from the distributed device; and
a transmission unit configured to transmit, to the distributed device, information related to channel estimation that is calculated based on the demodulation reference signal received by the reception unit, and
the distributed device includes:
a transmission unit configured to transmit the indication related to the configuration to the wireless device; and
a reception unit configured to receive information related to the channel estimation from the wireless device.

6. A communication method performed by a wireless device, the communication method comprising:
configuring, with respect to a plurality of endpoints used for uplink demodulation reference signal beamforming, a configuration in which at least one window for receiving the demodulation reference signal is used for each endpoint; and
receiving the demodulation reference signal by using the window.
